Europäisches Patentamt

European Patent Office

Office européen des brevets

(19)

(11) Publication number: **0 259 694 B1**

## EUROPEAN PATENT SPECIFICATION

(12)

(45) Date of publication of patent specification: **06.03.91**  (51) Int. Cl.⁵: **B60R 22/34**

(21) Application number: **87112327.9**

(22) Date of filing: **25.08.87**

(54) Vehicle occupant safety apparatus.

(30) Priority: **12.09.86 US 906544**

(43) Date of publication of application:
**16.03.88 Bulletin 88/11**

(45) Publication of the grant of the patent:
**06.03.91 Bulletin 91/10**

(84) Designated Contracting States:
**DE FR GB IT**

(56) References cited:
**BE-A- 809 121**         **CH-A- 551 892**
**DE-A- 2 346 553**       **GB-A- 2 047 516**
**US-A- 3 220 747**       **US-A- 3 931 866**
**US-A- 4 065 070**

(73) Proprietor: **TRW VEHICLE SAFETY SYSTEMS INC.**
**1900 Richmond Road**
**Lyndhurst Ohio 44124(US)**

(72) Inventor: **Rumpf, Robert J.**
**37 Fisher**
**Grosse Pointe Michigan 48230(US)**

(74) Representative: **Leiser, Gottfried, Dipl.-Ing. et al**
**Patentanwälte Prinz, Leiser, Bunke & Partner**
**Manzingerweg 7**
**W-8000 München 60(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Background of the Invention

#### Field of the Invention

The present invention relates to an occupant safety apparatus used in a vehicle. Particularly, the present invention relates to locking a seat belt retractor to prevent seat belt webbing from withdrawing from the retractor under certain vehicle conditions.

#### Description of the Art

Seat belt retractors which lock to prevent belt webbing withdrawal are known. A known seat belt retractor includes a frame supporting a spool for rotation. Seat belt webbing is wound around the spool. A ratchet wheel is connected with the spool. A pawl is pivotally supported by the frame. Upon pivoting, the pawl engages a tooth of the ratchet wheel to block rotation of the spool. This prevents belt webbing unwinding from the spool.

The pawl is commonly pivoted by an inertia mechanism in response to vehicle deceleration, such as would be encountered in a crash or panic stop. The pawl may be pivoted by a web-sensitive device, which actuates in response to the belt webbing being withdrawn from the spool above a predetermined rate. The pawl may also be pivoted by a solenoid which is electrically actuated in response to vehicle deceleration. Solenoid actuated pawls are disclosed in US-A-3,825,505 and US-A-3,931,866 (according to the preamble of Claim 1), and in GB-A-2,047,516.

### Summary of the Invention

The present invention provides a safety apparatus which restrains movement of an occupant of a vehicle in response to activating the vehicle's brake system This safety apparatus is actuated as a function of brake activation even if there is relatively little or no vehicle deceleration. For example, if the brakes are activated when the vehicle is operating on a wet or icy surface and little or no vehicle deceleration occurs, the safety apparatus of the present invention will still be actuated.

The present invention is an occupant safety apparatus for use in a vehicle with a braking system which is activated by fluid pressure The occupant safety apparatus includes an occupant restraint, a sensor and an actuator. The occupant restraint is operable from an unactuated condition to an actuated condition to restrain movement of a vehicle occupant relative to the vehicle during a collision. The sensor detects fluid pressure in the braking system. The actuator is connected with the sensor and actuates the occupant restraint from the unactuated condition to the actuated condition in response to the sensor detecting the fluid pressure in the braking system reaching a predetermined magnitude.

The present invention is an occupant safety apparatus which includes belt webbing to restrain the occupant from movement relative to the vehicle. At least one spool is provided about which the belt webbing is wound. A frame supports the spool for rotation to enable belt withdrawal from the spool and belt retraction onto the spool. A ratchet wheel is connected with the spool. The ratchet wheel has a plurality of teeth spaced thereabout. A pawl is pivotally supported by the frame and pivots from a first position to a second position to engage the teeth on the ratchet wheel to prevent rotation of the spool. The pawl is normally biased to the first position in which the spool may rotate. A solenoid causes the pawl to pivot from the first position to the second position in which rotation of the spool is blocked. The solenoid has an axially movable member that contacts and pivots the pawl. The solenoid is actuated to move the member in response to an actuation signal. A pressure sensitive switch generates an electrical signal which is communicated to a control circuit to create the actuation signal. The pressure sensitive switch is connected with the braking system to generate the electrical signal in response to the pressure of the fluid in the braking system reaching a predetermined magnitude. The control circuit maintains the actuation signal for a predetermined time after the pressure sensitive switch discontinues the electrical signal. The above mentioned advantages are achieved by the features of Claim 1.

### Brief Description of the Drawings

Further features of the present invention will become apparent to those skilled in the art to which the present invention relates from a reading of the following specification made with reference to the accompanying drawings, in which:

Fig. 1 is a schematic view of an apparatus embodying the present invention;

Fig. 2 is a side view of a retractor mechanism forming a part of the apparatus of Fig. 1;

Fig. 3 is a rear view of the retractor mechanism of Fig. 2, taken approximately along the line 3-3;

Figs. 4 and 5 are side views of parts of the retractor mechanism of Fig. 2 illustrating the parts in different positions; and

Fig. 6 is a schematic diagram of a control circuit forming a part of the apparatus of Fig. 1.

Description of a Preferred Embodiment

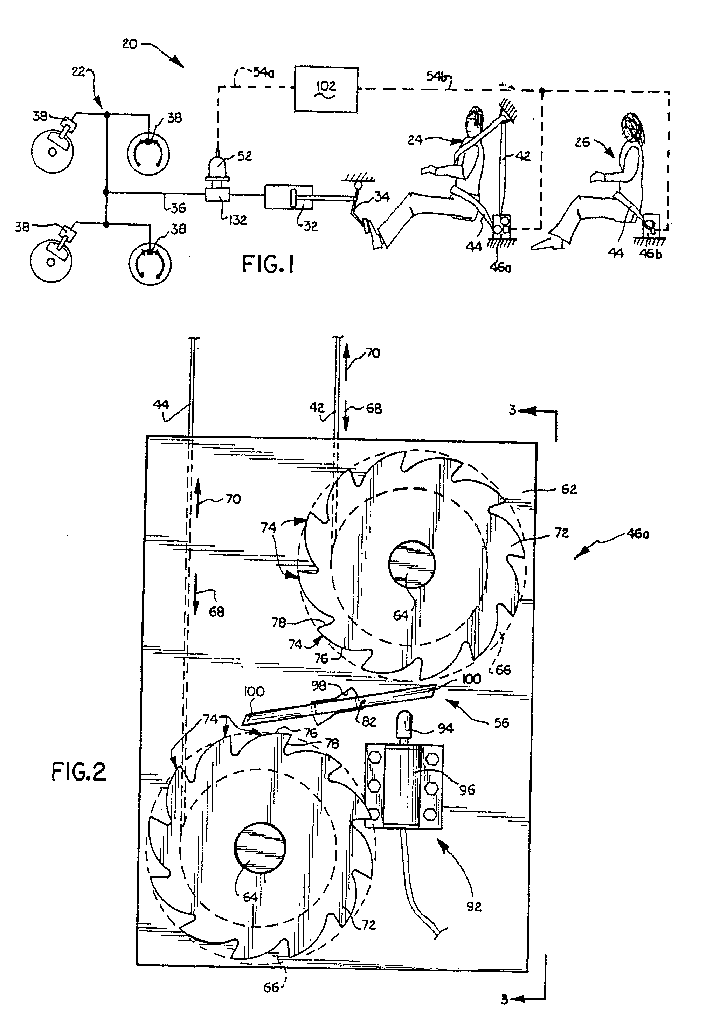

An occupant safety apparatus 20, according to the present invention, is illustrated in Fig. 1. The occupant safety apparatus 20 is used in a motor vehicle (not shown) having a braking system 22 which is activated by fluid pressure. When actuated, the occupant safety apparatus 20 restrains vehicle occupants 24, 26 from movement relative to the vehicle during certain emergency situations, such as a crash or a panic stop. The occupant safety apparatus 20 is actuated in response to sensing the pressure in the braking system 22 reaching a predetermined magnitude.

The illustrated braking system 22 is a known hydraulic braking system commonly used in an automobile. The braking system 22 includes a master cylinder 32 which is pressurized in response to the vehicle operator 24 depressing the brake pedal 34. Hydraulic pressure is communicated to brake lines 36 and, in turn, to wheel cylinders 38 which operate the brakes for each individual vehicle wheel. While the braking system 22 is illustrated as having a pair of front disk brakes and a pair of rear drum brakes, this system is merely illustrative and all disk or all drum brakes may be used. Other types of fluid-operated braking systems may also be used, such as a pneumatic braking system, without detracting from the spirit of the present invention.

Front and rear seat occupants 24, 26, respectively, have seat belt webbing about at least one portion of their torsos. The front seat occupant 24 is wearing a shoulder belt 42 and a lap belt 44. The rear seat occupant 26 is wearing the lap belt 44 only. The seat belts 42, 44 extend around the occupants 24, 26 in a known manner. The seat belts 42, 44 are fastened at one end in a buckle (not shown) anchored to the vehicle and are attached at the other end to a retractor mechanism 46a or 46b. The retractor mechanisms 46a, 46b are anchored to the vehicle. The safety apparatus 20 also includes a pressure sensitive switch 52, electrically conductive wiring 54a, 54b, a locking mechanism 56 (Fig. 2), and a control circuit 102.

The retractor mechanisms 46a, 46b (Fig. 1) are of different construction. The front retractor 46a has two spools whereas the rear retractor 46b has a single spool. Only the front retractor 46a will be described in detail. It will become apparent that the features described below can be applied to the rear retractor 46b as well.

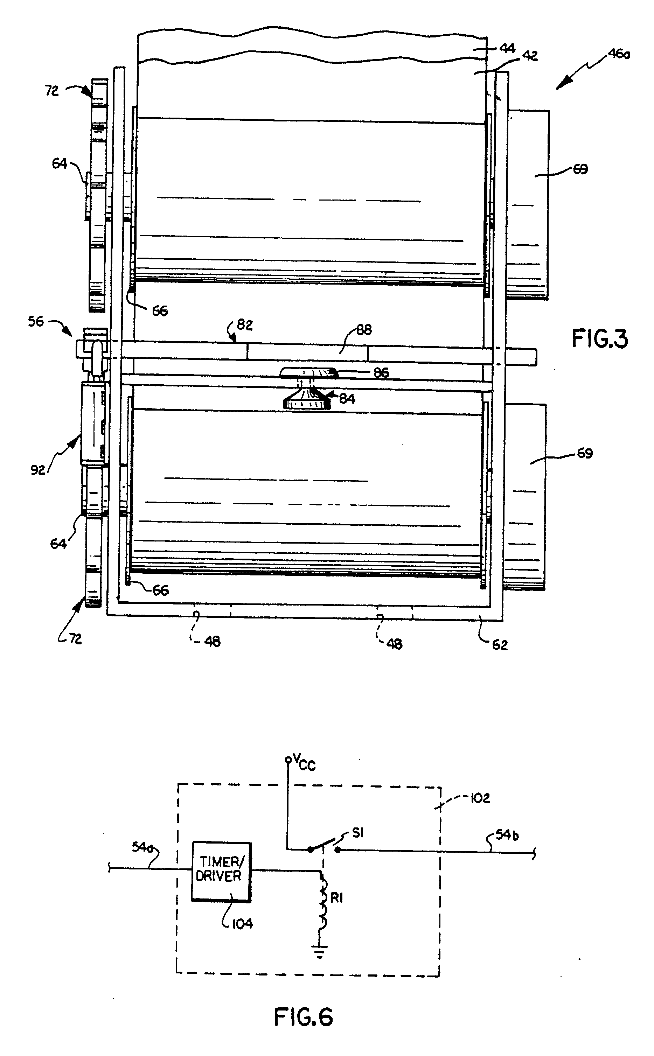

The retractor mechanism 46a (Figs. 2 and 3) includes a frame 62 for mounting the retractor mechanism to a vehicle in a known manner, such as by inserting fasteners through openings 48 (Fig. 3) or by welding the frame to the vehicle. The frame 62 is fabricated from steel of a thickness and configuration sufficient to withstand the loading encountered during a crash or panic stop. The frame 62 supports a pair of radially spaced apart shafts 64 for rotation about their respective longitudinal axes. A spool 66 is fixed to a respective shaft 64.

The webbing of the belts 42, 44 is wound around the spools 66. The webbing of the belts 42, 44 is wound about the spools 66 for storage while the restraint system is not in use. Springs (not shown) bias the spools to wind the webbing of the belts 42, 44 on the spools 66, as indicated by the arrows 68. The belts 42, 44 can be withdrawn from their retracted position on the spools 66, in the direction indicated by arrows 70, so that the belts can be extended about the lap or shoulder of the occupant 24. The retractor mechanism 46a may also include a known comfort mechanism 69. The comfort mechanism 69, as is known, prevents retraction of webbing of the belts 42 or 44 onto the spools 66 after the belt is positioned in a desired manner about the occupant 24. The comfort mechanism 69 thus enables the belt 42, 44 to lie in a loose manner about the occupant 24.

A ratchet wheel 72 is fixed to one end of each shaft 64. Each ratchet wheel 72 has a plurality of teeth 74 spaced about its outer circumference. Each of the teeth 74 has a leading face 76 and a trailing face 78. Between the ratchet wheels 72, supported on the frame 62 for pivotal movement, is a pawl 82. Together, the pawl 82 and ratchet wheels 72 comprise the locking mechanism 56 which, when actuated, prevents rotation of the spools 66 in one direction relative to the frame 62. When such rotation of the spools is prevented, withdrawal of the seat belt 42, 44 from the spools 66 is likewise prevented. Thus, during sudden deceleration, for example, in a panic stop or crash when the locking mechanism 56 is actuated, the belts 42, 44 cannot be withdrawn from the spools 66. The webbing of the belts 42, 44 restrains occupant 24 movement, as is known.

Engagement of the pawl 82 with a ratchet wheel 72 will not prevent the ratchet wheel from rotating in a counterclockwise direction, as viewed in Fig. 2, because during such rotation, the pawl 82 merely contacts and rides along the leading face 76 of each tooth 74. Thus, the belts 42 and 44 can be wound up or retracted onto the spools 66. Rotation of the spools 66 in a clockwise direction, as viewed in Fig 2, which corresponds to belt 42, 44 withdrawal from the spools, is prevented, however, because the pawl 82 engages and blocks movement of the trailing face 78 of a tooth 74.

The locking mechanism 56 can be actuated in two ways. First, the locking mechanism 56 can be actuated by an inertia weight 84 (Fig. 3). The weight 84 is supported from the frame 62 so that it does not contact the webbing of the belts 42 or 44 and pivots in response to deceleration of the vehicle, as is known. The pawl 82 extends across the frame 62 above the inertia weight 84. Upon pivoting of the inertia weight 84 a certain amount relative to frame 62, an upper portion 86 of the inertia weight engages and lifts a projecting portion 88 of the pawl 82. Lifting the projection 88 pivots the pawl 82 into engagement with the ratchet wheels 72 and thereby prevents rotation of the spools 66 in a belt withdrawal direction 70. Such a retractor locking mechanism is disclosed in U.S. Patent No. 4,065,070.

The second way in which the locking mechanism 56 can be actuated is by a solenoid 92 (Fig. 2). The solenoid 92 is fixed to the frame 62 by any known method, such as bolts or welding. The solenoid 92 is of a known construction and includes an axially movable member 94 and a coil 96. The member 94 is normally retracted within the coil 96 and biased to the retracted position by a spring (not shown). Upon energization of the coil 96, the member 94 is caused to extend axially away from the coil 96. The axially movable member 94 has an end portion which engages the pawl 82 and pivots the pawl into engagement with the ratchet wheels 72. The end portion of the axially movable member 94 is rounded so that when it engages the pawl 82, it slides easily along the lower surface of the pawl. While solenoid 92 is described, it should be apparent that other types of electromechanical devices could be used, such as relays. Furthermore, while the axially movable member 94 is described as directly engaging the pawl 82, it should be apparent that the member could be used to activate a pilot pawl mechanism, as is known.

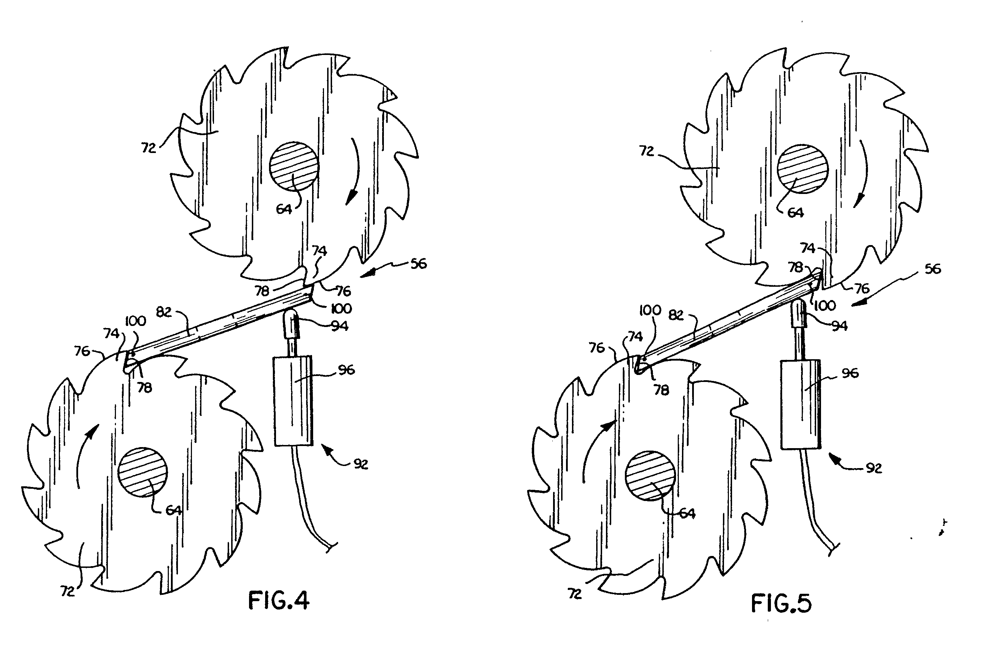

The pawl 82 is normally biased by gravity away from engaging the ratchet wheels 72. The bias is easily overcome by the actuation force exerted by the inertia weight 84 or the solenoid 92. It is possible that when the pawl 82 is pivoted by either the weight 84 or the solenoid 92, a trailing face 78 of a tooth 74 on one of the ratchet wheels 72 will not be in alignment with the corresponding end portion 100 of the pawl 82. Therefore, as illustrated in Fig. 4, the pawl 82 may engage the leading face 76 of a tooth 74 on the one ratchet wheel 72. If the corresponding spool 66 is rotating in a clockwise direction, as viewed in Fig. 4, during this time due to torso movement of the occupant 24, 26, the pawl 82 will pivot in slot 98 (see fig.2) until the second ratchet wheel is blocked from withdrawal. A relatively short interval of time will lapse before both spools 66 are rotated to the locked position as illustrated in Fig 5.

As illustrated in Fig. 5, when the pawl 82 is fully blocking both ratchet wheels 72 from rotating in the belt withdrawal direction 70, the end portions 100 of the pawl 82 are in engagement with a trailing face 78 of one tooth 74 on each of the ratchet wheels 72. The spools 66 are subjected to the force exerted on the belt webbing 42, 44 and attempt to continue to rotate in the clockwise direction. Because the pawl 82 is disposed between the spools 66, however, the forces on the spools tend to pivot the pawl further. This will seat the pawl 82 between a leading face 76 and a trailing face 78 of adjacent teeth and firmly lock the pawl in the ratchet wheels 72 to block rotation of the spools 66.

As previously indicated, the solenoid 92 is actuated in response to fluid pressure in the braking system 22. A connector 132 (Fig. 1) is disposed in the brake line 36 and carries the pressure-sensitive switch 52. The switch 52 is of the piezoelectric type and is exposed to fluid pressure in the brake line 36. The switch 52 may be of the type marketed by Sigma-Netics, Inc. of Fairfield, New Jersey under the designation series 703. The switch 52 generates an electrical signal when the fluid pressure in the brake line 36 exceeds a predetermined magnitude. The switch 52 preferably generates an electrical signal when the hydraulic brake system develops a pressure above 750 psi. This pressure corresponds to stopping a 3,000 pound vehicle at a deceleration rate of approximately 0.7 g. It has been found that the vehicle operator 24 will typically activate the braking system 22 prior to a collision, or during a panic stop, at a pressure greater than 750 psi in order to decelerate the vehicle at a rate of 0.7 g or greater. Under normal operating conditions, however, an operator may also pressurize the brake system 22 above the 750 psi threshold.

The occupant safety apparatus 20 also includes a control circuit 102 which is placed between, and electrically connected with, the pressure switch 52 and the solenoid 92. As illustrated in Fig. 6, the control circuit 102 includes a timer/driver 104, a relay R1, a switch S1 having normally open contacts, and a power supply $V_{cc}$. The timer/driver 104 is of a known design and may include an MC1455 integrated timer circuit marketed by Motorola Semiconductor Products, Inc. of Phoenix, Arizona. For simplicity, the control circuit 102 is described as including the relay R1 and switch S1. However, it will be apparent that the control circuit 102 may be entirely constructed of solid state circuitry.

When the timer/driver 104 receives an electrical signal from the pressure-sensitive switch 52, the timer/driver activates the relay R1 to close the switch S1. Power from the power supply $V_{cc}$ flows to each of the solenoids 92 in the system 20 through wiring 54b. Once the electrical signal generated by the pressure sensitive switch 52 is discontinued, the timer/driver 104 maintains the relay R1 actuated for a predetermined amount of time. Thus, the solenoid 92 remains actuated to prevent seat belts 42, 44 from being withdrawn even after the braking system 22 pressure falls below the predetermined magnitude. It will be apparent that whenever the pressure sensitive switch 52 generates the electric signal, the locking mechanism 56 will actuate to prevent withdrawal of the seat belts 42, 44 for a predetermined amount of time after the electric signal has stopped. It will also be apparent that the electric signal generated by the pressure-sensitive switch 52 can be directly applied to the solenoid 92.

The solenoid 92 is preferably maintained in the actuated condition for approximately four seconds after the actuation signal generated by the pressure switch 52 is discontinued. Thus, if the pressure in the braking system 22 is lost or stopped during an accident, the solenoid 92 will still be energized for a period of four seconds after the electrical signal discontinues. This permits the occupants 24, 26 to be restrained during a subsequent emergency condition, such as a vehicle rollover or when the operator can no longer maintain the brake pedal 34 depressed. Four seconds is believed to be sufficient time to restrain the occupant during a crash after braking system pressure reduces. It will be apparent that should it be necessary, the timer/driver 104 may be modified to change the time that the solenoid 92 is energized after the pressure in the braking system 22 falls below the predetermined magnitude.

The safety apparatus 20 prevents belts 42, 44 from being withdrawn from the retractor spools 66 during an emergency situation That is, the locking mechanism 56 is actuated in response to the fluid pressure in the braking system 22 exceeding a predetermined magnitude. The predetermined pressure will be reached regardless of the deceleration that the vehicle is experiencing. Therefore, if the braking system 22 is activated and the predetermined pressure is reached, but the vehicle slides on an icy road without decelerating, withdrawal of the seat belts from retractors 46a, 46b is prevented.

The pressure-sensitive switch 52 can easily be replaced in order to generate the electrical signal in response to a different pressure in the braking system 22. This can be done by disconnecting wire 54a from the switch 52 and then unscrewing the switch from the connector block 132. A new switch 52, responsive to the desired actuation pressure, can be screwed into the connector 132 and the wire 54a reconnected.

In operation, whenever the brake pedal 34 (Fig. 1) is depressed, braking pressure is developed in the master cylinder 32. Once the pressure in the braking system 22 reaches a magnitude corresponding to the threshold value of the selected pressure sensitive switch 52, the switch generates an electrical signal which is conducted through the wire 54a. In response to the signal, the control circuit 102 closes switch S1, allowing actuation power to flow from the power supply $V_{cc}$ to wire 54b. When the solenoids 92 receive actuating power, they are all energized to pivot the pawls 82 into engagement with ratchet wheels 72. When the pawls 82 engage the trailing edges 78 of the teeth on the ratchet wheels, rotation of the spools 66 is prevented in the seat belt withdrawal direction 70. When rotation of the spools 66 is prevented, the seat belt webbing 42, 44 cannot be further withdrawn from the spools. Therefore, the occupants 24, 26 wearing the seat belts 42, 44 are restrained from movement relative to the vehicle. The control circuit 102 maintains the solenoids 92 energized for four seconds after the signal from the switch 52 stops.

The present invention contemplates that the electrical signal used to actuate the solenoid 92 to block withdrawal of the belts 42, 44 can also be used for other purposes. For example, the signal can be used to first release actuation of the comfort mechanism 69 (Fig. 3). Releasing the comfort mechanism 69 allows the bias spring to retract the belt 42 onto the spool 66 a slight distance and tighten the belt against the torso of the occupant 24.

The present invention also contemplates combining the restraint system with a braking system that incorporates an anti-locking braking system (ABS) feature. The ABS controller, typically in the form of a microcomputer, may provide the electrical signal with which to actuate and maintain the solenoid 92 actuated. The pressure switch 52 and control circuit 102 could thus be eliminated in such an application of the present invention.

From the above description of a preferred embodiment of my invention, those skilled in the art will perceive improvements, changes and modifications. Such improvements, changes and modifications within the skill of the art are intended to be included herein and covered by the hereinafter appended claims.

Claims

1.  A safety apparatus (20) for use in a vehicle comprising:
    belt webbing (42) for engaging a vehicle occupant;

a spool (66) around which the belt webbing (42) is wound;

means (62) supporting said spool (66) for rotation to permit withdrawal of the belt webbing (42) from the spool (66) and to permit winding of the belt webbing (42) onto the spool (66);

lock means (72, 82) operable to block rotation of said spool (66) to prevent withdrawal of the belt webbing (42) from said spool (66), said lock means including a ratchet wheel (72) connected with said spool (66) and a pawl (82) supported for pivotal movement, said pawl (82) being located away from said ratchet wheel (72) and being pivotable into engagement with said ratchet wheel (72) to block rotation of said ratchet wheel (72) and thereby block rotation of said spool (66) in the belt withdrawal direction,

an inertia weight (84) responsive to vehicle deceleration above a predetermined rate for controlling said lock means (72, 82); and

actuator means (92) for effecting pivotal movement of said pawl (82) into engagement with said ratchet wheel (72), said actuator means comprising solenoid means (92) including a coil (96) having current applied thereto in response to a signal; characterized in that said inertia weight (84) engages said pawl (82) for pivoting said pawl (82) into engagement with said ratchet wheel (72), said vehicle having a braking system activated by fluid pressure and pressure sensitive switch means (52) being provided for generating said signal in response to the fluid pressure in the braking system reaching a predetermined magnitude, and said solenoid means (92) further including an axially movable member (94) located within said coil (96), said axially movable member (94) being movable upon current being applied to said coil (96) to engage said pawl (82) and to pivot said pawl (82) into engagement with said ratchet wheel (72) independently of said inertia weight (84).

2. A safety apparatus as set forth in claim 1 wherein said axially movable member (94) is spaced from said pawl (82) when current is not applied to said coil (96), and said axially movable member moves to engage said pawl upon current being applied to said coil.

3. A safety apparatus as set forth in claim 1 further including a control circuit (102) for applying current to said coil (96) in response to receiving the output signal generated by said pressure sensitive switch means (52), said control circuit including means (104) for maintaining said coil in an energized condition for a predetermined period of time after the output signal is discontinued.

4. A safety apparatus as set forth in claim 1 comprising two belt webbings (42, 44) and two spaced apart spools (66) around which said two belt webbings are wound, respectively, said lock means including two ratchet wheels (72) connected with said two spools, respectively, said pawl (82) being located away from said two ratchet wheels and being pivotable into engagement with said two ratchet wheels to block rotation of said two spools (66), said pawl (82) having opposite ends engageable with said two ratchet wheels, respectively, and said axially movable member (94) having an end portion that engages said pawl (82) between said opposite ends.

5. A vehicle comprising two safety apparatuses as set forth in claim 1 for engaging a second vehicle occupant as well.

**Revendications**

1. Appareil de sécurité (20) destiné à être utilisé dans un véhicule, comprenant:
   - une bande de ceinture (42) propre à venir en contact avec un passager du véhicule;
   - un rouleau (66) autour duquel la bande de ceinture (42) est enroulée;
   - des organes (62) destinés à supporter le rouleau (66) afin que celui-ci puisse tourner pour permettre le déroulement de la bande de ceinture (42) par rapport au rouleau (66) et pour permettre l'enroulement de la bande de ceinture (42) autour du rouleau (66);
   - un mécanisme de verrou (72, 82) qui peut être actionné pour bloquer la rotation du rouleau (66) afin d'empêcher le déroulement de la bande de ceinture (42) par rapport audit rouleau (66), ledit mécanisme de verrou comprenant une roue dentée (72) attachée audit rouleau (66) et un loquet (82) supporté afin de pouvoir tourner, ledit loquet (82) étant situé à distance de ladite roue dentée (72) et pouvant être tourné en engagement avec ladite roue dentée (72) afin de bloquer la rotation dudit rouleau (66) dans la direction du déroulement de la ceinture;
   - une masse d'inertie (84) sensible à une décélération du véhicule dépassant une valeur prédéterminée pour commander ledit mécanisme de verrou (72, 82); et

- des moyens d'actionnement (92) pour faire tourner ledit loquet (82) en engagement avec ladite roue dentée (72), lesdits moyens d'actionnement comprenant un solénoïde (92) comprenant une bobine (96) qui est mise sous tension en réponse à un signal; caractérisé en ce que ladite masse d'inertie (84) engage ledit loquet (82) afin de faire tourner celui-ci en engagement avec ladite roue dentée (72), ledit véhicule ayant un système de freinage mis en oeuvre par une pression de fluide et des moyens de commutation (52) sensibles à la pression étant prévus pour produire ledit signal lorsque la pression de fluide dans le système de freinage atteint une valeur donnée, et ledit solénoïde (92) comprenant en outre un organe axialement mobile (94) situé dans ledit solénoïde, ledit organe axialement mobile (94) étant déplaçable lorsqu'un courant est appliqué audit solénoïde (96) afin d'engager ledit loquet (82) et le faire tourner en engagement avec ladite roue dentée (72) indépendamment de ladite masse d'inertie (84).

2. Appareil de sécurité selon la revendication 1, caractérisé en ce que ledit organe axialement mobile (94) est situé à distance dudit loquet (82) lorsque ladite bobine (96) est hors tension, et en ce que ledit organe axialement mobile (94) se déplace pour engager ledit loquet lorsque ladite bobine est mise sous tension.

3. Appareil de sécurité selon la revendication 1, caractérisé en ce qu'il comprend en outre un circuit de commande (102) destiné mettre ladite bobine (96) sous tension en réponse à la réception du signal de sortie produit par lesdits moyens de commutation (52) sensibles à la pression, ledit circuit de commande comprenant des moyens (104) destinés à maintenir ladite bobine sous tension pendant une durée prédéterminée après cessation du signal de sortie.

4. Appareil de sécurité selon la revendication 1, caractérisé en ce que en ce qu'il comprend deux bandes de ceinture (42, 44) et deux rouleaux (66) écartés l'un de l'autre autour desquels les bandes de ceinture sont respectivement enroulées, ledit mécanisme de verrou comprenant deux roues dentées (72) attachées respectivement auxdits rouleaux, ledit loquet (82) étant situé à distance des deux rouleaux et pouvant être tourné en engagement avec les deux roues dentées afin de bloquer la rotation des deux rouleaux (66), ledit loquet présentant des extrémités opposées propres à venir en engagement avec les deux roues dentées respectivement, et ledit organe axialement mobile (94) présentant une partie d'extrémité qui engage ledit loquet (82) entre ses extrémités opposées.

5. Un véhicule comprenant deux appareils de sécurité selon la revendication 1, afin de venir également en contact avec un second passager.

## Ansprüche

1. Sicherheitsvorrichtung (20) zur Verwendung in einem Fahrzeug, enthaltend:

ein Gurtband (42) zum Anlegen an einen Fahrzeuginsassen;

eine Spule (66), um welche das Gurtband (42) gewickelt ist;

eine Einrichtung (62) zur drehbaren Lagerung der Spule (66), um ein Abziehen des Gurtbands (42) von der Spule und ein Aufwickeln des Gurtbands (42) auf die Spule zu gestatten;

eine Verriegelungseinrichtung (72, 82), mit der die Drehung der Spule (66) blockiert werden kann, um ein Abziehen des Gurtbands (42) von der Spule (66) zu verhindern, wobei die Verriegelungseinrichtung ein Sperrzahnrad (72) enthält, das mit der Spule (66) verbunden ist, sowie eine schwenkbar gelagerte Sperrklinke (82), die mit Abstand zu dem Sperrzahnrad (72) angeordnet und in einen Eingriff mit dem Sperrzahnrad (72) schwenkbar ist, um die Drehung des Sperrzahnrads (72) und dadurch die Drehung der Spule (66) in der Gurtabzugsrichtung zu blockieren;

eine Trägheitsmasse (84), die auf eine Fahrzeugabbremsung oberhalb einer vorbestimmten Stärke anspricht und die Verriegelungseinrichtung (72, 82) steuert; und

eine Betätigungseinrichtung (92), mit der eine Schwenkbewegung der Sperrklinke (82) in einen Eingriff mit dem Sperrzahnrad (72) bewirkt wird, wobei die Betätigungseinrichtung eine Spuleneinrichtung (92) aufweist, die eine Spule (96) umfaßt, an die in Reaktion auf ein Signal Strom gelegt wird; **dadurch gekennzeichnet,** daß die Trägheitsmasse (84) an der Sperrklinke (82) angreift, um die Sperrklinke (82) in einen Eingriff mit dem Sperrzahnrad (72) zu schwenken, daß das Fahrzeug ein hydraulisch betriebenes Bremssystem aufweist sowie eine druckempfindliche Schalteinrichtung (52), die zur Erzeugung des genannten Signals dient, sobald der Hydraulikdruck im Bremssystem eine vorbestimmte Höhe erreicht, und daß die Spuleneinrichtung (92) ferner ein innerhalb der Spule (96) angeordnetes bewegliches Element (94) umfaßt, das durch einen an die Spule (96) gelegten Strom bewegbar ist, um in die Sperrklinke (82) einzugreifen und die Sperrklinke (82) unabhängig von der Trägheitsmasse (84) in Eingriff mit dem Sperrzahnrad (72) zu schwenken.

2. Sicherheitsvorrichtung nach Anspruch 1, worin das axial bewegliche Element (94) von der Sperrklinke (82) beabstandet ist, wenn kein Strom an die Spule (96) gelegt ist, und worin sich das axial bewegliche Element bewegt, um in die Sperrklinke einzugreifen, sobald Strom an die Spule gelegt wird.

3. Sicherheitsvorrichtung nach Anspruch 1, welche ferner einen Steuerkreis (102) aufweist, der in Reaktion auf einen Empfang des von der druckempfindlichen Schalteinrichtung (52) erzeugten Ausgangssignals Strom an die Spule (96) legt und eine Einrichtung (104) aufweist, die die Spule während einer vorbestimmten Zeitdauer nach Unterbrechung des Ausgangssignals in einem erregten Zustand hält.

4. Sicherheitsvorrichtung nach Anspruch 1 mit zwei Gurtbändern (42, 44) und zwei mit einem Zwischenraum angeordneten Spulen (66), um die jeweils eines der beiden Gurtbänder gewikkelt ist, wobei die Verriegelungseinrichtung zwei Sperrzahnräder (72) umfaßt, die jeweils mit den beiden Spulen verbunden sind, die Sperrklinke (82) mit Abstand zu den beiden Sperrzahnräder angeordnet und in Eingriff mit den beiden Sperrzahnrädern schwenkbar ist, um die Drehung der beiden Spulen (66) zu blockieren, die Sperrklinke (82) einander gegenüberliegende Enden aufweist, die jeweils mit einem der beiden Sperrzahnräder in Eingriff gelangen können, und das axial bewegliche Element (94) einen Endteil aufweist, der die Sperrklinke (82) zwischen den genannten, einander gegenüberliegenden Enden beaufschlagt.

5. Fahrzeug mit zwei Sicherheitsvorrichtungen nach Anspruch 1 zum Anlegen auch an einen zweiten Fahrzeuginsassen.

EP 0 259 694 B1

FIG.1

FIG.2

9

FIG.3

FIG.6

FIG.5

FIG.4